# EUROPÄISCHE PATENTSCHRIFT

(11) **EP 4 263 258 B1**
(45) Veröffentlichungstag und Bekanntmachung des Hinweises auf die Patenterteilung: **29.01.2025**
(21) Anmeldenummer: 21840511.6
(22) Anmeldetag: 16.12.2021
(51) Int. Cl.: B60K 15/03

(54) **VERSTEIFUNGSELEMENT FÜR EINEN FLÜSSIGKEITSBEHÄLTER, FLÜSSIGKEITSBEHÄLTER FÜR EIN KRAFTFAHRZEUG MIT EINEM VERSTEIFUNGSELEMENT UND HERSTELLVERFAHREN FÜR EINEN FLÜSSIGKEITSBEHÄLTER MIT EINEM VERSTEIFUNGSELEMENT**
STIFFENING ELEMENT FOR A LIQUID CONTAINER, LIQUID CONTAINER FOR A MOTOR VEHICLE WITH A STIFFENING ELEMENT AND PRODUCTION METHOD FOR A LIQUID CONTAINER HAVING A STIFFENING ELEMENT
ÉLÉMENT DE RIGIDIFICATION POUR RÉCIPIENT À LIQUIDE, RÉCIPIENT À LIQUIDE POUR VÉHICULE AUTOMOBILE DOTÉ D'UN ÉLÉMENT DE RIGIDIFICATION ET PROCÉDÉ DE FABRICATION D'UN RÉCIPIENT À LIQUIDE DOTÉ D'UN ÉLÉMENT DE RIGIDIFICATION

(30) Priorität: 16.12.2020 DE 102020133769
(43) Veröffentlichungstag der Anmeldung: 25.10.2023
(73) Patentinhaber: Kautex Textron GmbH & Co. KG, 53229 Bonn (DE)
(72) Erfinder: LORENZ, Harald, 53474 Bad Neuenahr-Ahrweiler (DE); MARX, Daniel, 50181 Bedburg (DE); QUANT, Frank, 53639 Königswinter (DE); GEBERT, Klaus, 47877 Willich (DE)
(74) Vertreter: Richly & Ritschel Patentanwälte PartG mbB
(86) Internationale Anmeldenummer: PCT/EP2021/086130
(87) Internationale Veröffentlichungsnummer: WO 2022/129302

(56) Entgegenhaltungen:
- DE-A1- 102005 054 179
- DE-A1- 102017 001 763
- US-A1- 2015 344 183
- US-A1- 2018 311 880
- US-B1- 6 338 420

## Beschreibung

Die Erfindung betrifft ein Versteifungselement für einen Flüssigkeitsbehälter, einen Flüssigkeitsbehälter für ein Kraftfahrzeug mit einem solchen Versteifungselement und ein Herstellverfahren für einen Flüssigkeitsbehälter mit einem Versteifungselement.

Versteifungselemente für Flüssigkeitsbehälter dienen dazu, den Flüssigkeitsbehälter unter statischen und dynamischen Betriebslasten in einem Kraftfahrzeug in Form zu halten und auszusteifen. Insbesondere bei Flüssigkeitsbehältern, die aus zwei Halbschalen zusammengesetzt sind, dienen Versteifungselemente dazu, den Behälter strukturell zu verstärken. Dabei besteht einerseits die Forderung, dass die Versteifungselemente möglichst leicht bauen sollen, um das Gewicht des Flüssigkeitsbehälters insgesamt gering zu halten. Weiter soll eine zuverlässige Verbindung zwischen dem Versteifungs-element und in der Regel mehrschichtig ausgeführten Innen-wandungen des Behälters hergestellt werden.

US 2018/311880 A1 beschreibt ein gattungsgemäßes Versteifungselement für einen Flüssigkeitsbehälter für ein Kraftfahrzeug.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe ein Versteifungselement für einen Flüssigkeitsbehälter für ein Kraftfahrzeug, wobei das Versteifungselement einen ersten Verbindungsbereich, einen zweiten Verbindungsbereich und einen Mittelbereich aufweist, wobei der erste Verbindungsbereich und der zweite Verbindungsbereich zumindest mittelbar durch den Mittelbereich miteinander verbunden sind, wobei der erste Verbindungsbereich und der zweite Verbindungsbereich eine unterschiedliche Verbindungsgeometrie aufweisen und wobei eine erste Verbindungsfläche des ersten Verbindungsbereichs größer ist als eine zweite Verbindungsfläche des zweiten Verbindungsbereichs.

### Begrifflich sei hierzu Folgendes erläutert:

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Im Rahmen der hier vorliegenden Patentanmeldung sei der Ausdruck "insbesondere" immer so zu verstehen, dass mit diesem Ausdruck ein optionales, bevorzugtes Merkmal eingeleitet wird. Der Ausdruck ist nicht als "und zwar" und nicht als "nämlich" zu verstehen.

Unter einem "Versteifungselement" wird ein Strukturelement verstanden, welches für den Einsatz in einem Flüssigkeitsbehälter vorgesehen ist und designiert zur Versteifung des Flüssigkeitsbehälters eingerichtet ist. Insbesondere kann ein Versteifungs-element Zugkräfte und Druckkräfte übertragen. Vorzugsweise ist ein Versteifungselement dazu eingerichtet, gegenüberliegende Wände eines im Inneren bedruckten Flüssigkeitsbehälters gegenüber Unterdrücken oder Überdrücken im Vergleich zur Umgebung auf einer durch die Längserstreckung des Versteifungselements im Wesentlichen definierten Distanz zu halten und damit den Flüssigkeitsbehälter zu versteifen. Insgesamt minimiert ein Versteifungselement die Verformung eines Flüssigkeitsbehälters bei Überdruck im Inneren des Flüssigkeitsbehälters und/oder bei Unterdruck im Flüssigkeitsbehälter.

Ein "Verbindungsbereich" ist ein Bereich des Versteifungselements, der zur Verbindung, insbesondere zur stoffschlüssigen Verbindung, mit dem Flüssigkeitsbehälter eingerichtet ist. Insbesondere weist ein Versteifungselement einen ersten Verbindungsbereich und einen in Längsrichtung des Versteifungselements gegenüberliegenden zweiten Verbindungsbereich auf. Vorzugsweise sind der erste Verbindungsbereich und der zweite Verbindungsbereich aus einem Stoff gestaltet, welcher stofflich kompatibel mit dem designierten Stoff des Flüssigkeitsbehälters ist, sodass eine Verschweißung an diesen designierten Kontaktbereichen möglich ist. Vorzugsweise sind der erste und der zweite Verbindungsbereich aus HDPE (High-Density Polyethylene) ausgeführt.

Unter einem "Mittelbereich" ist der Bereich des Versteifungselements zwischen dem ersten Verbindungsbereich und dem gegenüberliegenden zweiten Verbindungsbereich zu verstehen.

Ausdrücklich sei darauf hingewiesen, dass Mittelbereich, erster Verbindungsbereich und zweiter Verbindungsbereich Abschnitte des Versteifungselements kennzeichnen. Dabei können Mittelbereich, erster Verbindungsbereich und zweiter Verbindungsbereich unterschiedliche Bauteile sein, alternativ können diese jedoch auch monolithisch miteinander ausgeformt sein.

Eine "Verbindungsgeometrie" meint die Geometrie eines Verbindungsbereiches, wobei die Verbindungsgeometrie eine "Verbindungsfläche" aufweist, welche designiert zum Verbinden, insbesondere zum stoffschlüssigen Verbinden, zwischen dem Verbindungsbereich und dem designierten Flüssigkeitsbehälter eingerichtet ist.

Bei dem Flüssigkeitsbehälter kann es sich beispielsweise um einen Kraftstofftank handeln.

Bei dem Flüssigkeitsbehälter kann es sich um einen Behälter zur Bevorratung von Harnstofflösung für einen SCR-Katalysator handeln.

Der Flüssigkeitsbehälter kann ein Behälter zur Bevorratung von Kühlflüssigkeit sein, beispielsweise zur Kühlung eines Motors oder einer Batterie.

Der Flüssigkeitsbehälter kann einen mehrschichtigen Wandungsaufbau aufweisen. So kann ein Sandwich- bzw. Schichtaufbau einer Wandung des Flüssigkeitsbehälters eine Schicht aufweisen, die eine Diffusionsbarriere für eine zu bevorratende Flüssigkeit darstellt. Eine solche Diffusionsbarriere kann beispielsweise von wenigstens zwei weiteren Schichten zweiseitig eingefasst sein.

Versteifungselemente werden vorzugsweise seriell mit den Wänden des designierten Flüssigkeitsbehälters oder seines Vorformlings verbunden, wobei das Gewicht des Versteifungselements zeitweise an einem Verbindungsbereich des Versteifungselements hängt, insbesondere an dem ersten Verbindungsbereich, wobei das Versteifungselement mit seiner Längserstreckungsrichtung insbesondere im Wesentlichen quer zur Richtung der Schwerkraft orientiert ist, sodass es auch zu einer Momentenbelastung an der ersten Verbindungsstelle kommt. Hierbei kann es zu einem Abkippe des Versteifungselements kommen, sodass die Orientierung des Versteifungselements nicht mehr seiner gewünschten Orientierung entspricht. Hierdurch kann es im Bereich der Verbindung auch zu ungewollte Verformungen des designierten Flüssigkeitsbehälters und/oder seines Vorformlings kommen.

Hier wird ein optimiertes Versteifungselement vorgeschlagen, welches an seinem ersten Verbindungsbereich eine größere Verbindungsfläche als an seiner zweiten Verbindungsfläche und damit insgesamt eine abweichende Geometrie des ersten Verbindungsbereichs zu dem zweiten Verbindungsbereich aufweist.

Im Herstellprozess des designierten Flüssigkeitsbehälters ist vorgesehen, dass das hier vorgeschlagene Versteifungselement zunächst mit dem ersten Verbindungsbereich mit der größeren Fläche verbunden wird. Der größere Verbindungsbereich macht die Verbindung weniger anfällig für die von dem Gewicht des Versteifungselements eingeleitete Kraft und das insbesondere eingeleitete Drehmoment, sodass ein Abkippen des Versteifungselements reduziert oder verhindert werden kann.

Der zweite Verbindungsbereich ist kleiner ausgestaltet, wodurch dieser auch mit geringerem Gewicht ausgestaltet werden kann. Hierdurch kann ein etwaiges Abkippen des Versteifungselements ebenfalls reduziert oder verhindert werden. Damit wirkt eine asymmetrische Gestaltung der Verbindungsbereiche synergistisch zur Reduzierung oder Vermeidung eines Abkippens des Versteifungselements.

In Versuchen konnte überraschend gezeigt werden, dass eine vergrößerte erste Verbindungsfläche auch eine Vereinfachung des Prozesses zur Herstellung eines designierten Flüssigkeitsbehälters ermöglicht, da die vergrößerte erste Verbindungsfläche erlaubt, dass das Versteifungselement mit dem designierten Flüssigkeitsbehälter oder seinem Vorformling stabiler und/oder einfacher verbunden werden kann und auch auf ein separates aktives Heizelement für den ersten Verbindungsbereich und eine zugehörige Mimik verzichtet werden kann. Somit wird im Mittenrahmen weniger Platz für Komponenten benötigt, wodurch auch kleinere Flüssigkeitsbehälter mit einem hier vorgeschlagenen Versteifungselement ausgerüstet werden können.

Weiterhin führt die vergrößerte erste Verbindungsfläche dazu, dass Versteifungselemente mit einer größeren Längserstreckung angewendet werden können, da diese nun eine maximal zulässige Abkippung nicht mehr überschreiten, sodass auch größere Flüssigkeitsbehälter mit dem hier vorgeschlagenen Versteifungselement versteift werden können und/oder das potenzielle Befüllungsvolumen des designierten Flüssigkeitsbehälters anwachsen kann, insbesondere da zumindest auf einer Seite auf einen flower pot (Wandeinzug für die Verschweißung) verzichtet werden kann.

Zweckmäßig liegt ein Flächenverhältnis aus der ersten Verbindungsfläche zu der zweiten Verbindungsfläche in einem Bereich zwischen 1,1 und 3,5 liegt, bevorzugt in einem Bereich zwischen 1,2 und 2,9 und besonders bevorzugt in einem Bereich zwischen 1,3 und 2,5.

### Begrifflich sei hierzu Folgendes erläutert:

Unter dem "Flächenverhältnis aus der ersten Verbindungsfläche zu der zweiten Verbindungsfläche" wird das Verhältnis der Flächen der ersten Verbindungsfläche zu der zweiten Verbindungsfläche verstanden, wobei das Verhältnis die Fläche der ersten Verbindungsfläche im Zähler und die Fläche der zweiten Verbindungsfläche im Nenner aufweist.

Vorzugsweise liegt die Untergrenze für den Bereich des Flächenverhältnisses bei 1,4, bevorzugt bei 1,5 und besonders bevorzugt bei 1,6.

Vorzugsweise liegt die Obergrenze für den Bereich des Flächenverhältnisses bei 2,8, bevorzugt bei 2,7 und besonders bevorzugt bei 2,6.

Ausdrücklich sei darauf hingewiesen, dass die individuellen vorstehend ausgeführten Bereichsgrenzen einzeln oder auch kumulativ miteinander verknüpft werden können, ohne den Gegenstand dieses Aspektes zu verlassen.

Versuche haben gezeigt, dass die vorstehenden Flächenverhältnisse zu einer besonders vorteilhaften Ausgestaltung des hier vorgeschlagenen Versteifungselements führen.

Ausdrücklich sei darauf hingewiesen, dass die vorstehenden Werte für die Bereichsgrenzen des Flächenverhältnisses nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs des Flächenverhältnisses liefern.

Besonders bevorzugt ist die erste Verbindungsfläche radialsymmetrisch ausgestaltet.

In Versuchen hat sich gezeigt, dass Versteifungselemente mit einer radialsymmetrischen ersten Verbindungsfläche besonders vorteilhaft sind, da ein Abkippen des Versteifungselements nach dem Verbinden des ersten Verbindungsbereichs und vor dem Verbinden des zweiten Verbindungsbereichs mit dem designierten Flüssigkeitsbehälter oder seinem designierten Vorformling besonders gut reduziert oder sogar verhindert werden kann. Hierdurch wird unter anderem auch eine größere Längserstreckung eines Versteifungselements möglich, sodass auch größere Flüssigkeitsbehälter einfacher und kostengünstiger hergestellt werden können.

Gemäß einer besonders zweckmäßigen Ausführungsform weist der erste Verbindungsbereich Schweißstifte auf.

### Begrifflich sei hierzu Folgendes erläutert:

Unter einem "Schweißstift" wird ein stiftförmig vorstehender Bereich eines Verbindungsbereichs verstanden. Vorzugsweise weist ein Schweißstift einen Durchmesser zwischen 1,0 mm und 3,5 mm auf, bevorzugt einen Durchmesser zwischen 1,5 mm und 3,0 mm und besonders bevorzugt einen Durchmesser zwischen 1,9 mm und 2,6 mm. Vorzugsweise weist ein Schweißstift eine eckige Grundfläche auf, insbesondere eine rechteckige Grundfläche und/oder eine quadratische Grundfläche oder eine Grundfläche in Form eines Polygons. Vorzugsweise weist ein Schweißstift eine Quererstreckung von 0,5 mm bis 3,0 mm auf, bevorzugt eine Quererstreckung zwischen 0,8 mm und 2,4 mm und besonders bevorzugt eine Quererstreckung zwischen 1,2 mm und 1,8 mm. Vorzugsweise weist ein Schweißstift eine Längserstreckung von größer gleich 0,7 und kleiner gleich 1,5 Durchmessern oder Quererstreckungen des Schweißstiftes auf, bevorzugt eine Längserstreckung von größer gleich 0,8 und kleiner gleich 1,35 Durchmessern oder Quererstreckungen des Schweißstiftes und besonders bevorzugt eine Längserstreckung von größer gleich 0,9 und kleiner gleich 1,1 Durchmessern oder Quererstreckungen des Schweißstiftes. Ein Schweißstift ist vorzugsweise in einem regulären Muster mit anderen Schweißstiften auf einem Verbindungsbereich angeordnet. Schweißstifte sind dazu eingerichtet, die Oberfläche des Verbindungsbereiches zu vergrößern, wodurch einerseits eine größere Oberfläche für eine adhäsive Verbindung zwischen dem designierten Fügepartner, insbesondere einer Wand eines Flüssigkeitsbehälters, und dem Verbindungsbereich erreicht werden kann, sodass nach dem Erreichen einer kraftschlüssigen Verbindung eine größere Kraft zwischen dem Verbindungsbereich und dem designierten Fügepartner übertragen werden kann. Anderseits ermöglicht die vergrößerte Oberfläche des Verbindungsbereiches in Verbindung mit dem vergleichsweise großen Verhältnis von Oberfläche eines Schweißstiftes zu Volumen eines Schweißstiftes, dass ein Verbindungsbereich, insbesondere ein oder mehrere Schweißstifte, einfacher aus der ersten Wärme des designierten Fügepartners aufgeweicht werden kann und so eine stoffschlüssige Verbindung zwischen dem Verbindungsbereich und dem designierten Fügepartner erreicht werden kann. Mit anderen Worten ist ein Schweißstift dazu eingerichtet, eine kraftschlüssige und/oder eine stoffschlüssige Verbindung zwischen dem Verbindungsbereich und dem designierten Fügepartner zu unterstützen, sodass nach dem Auskühlen höhere Kräfte zwischen dem Verbindungsbereich und dem designiertem Fügepartner übertragen werden können.

Hier wird ein Versteifungselement vorgeschlagen, welches derart ausgestaltet ist, dass es zum Verbinden mit dem designierten Flüssigkeitsbehälter, insbesondere zum stoffschlüssigen Verbinden, nicht an beiden Verbindungsbereichen aktiv erwärmt werden muss. Insbesondere durch die hier vorgeschlagenen Schweißstifte an dem ersten Verbindungsbereich kann erreicht werden, dass diese lediglich durch die passive erste Wärme der Wand des designierten Flüssigkeitsbehälters oder des zur Herstellung des designierten Flüssigkeitsbehälters verwendeten Vorformlings mit dem designierten Flüssigkeitsbehälter oder dem Vorformling verbunden, insbesondere verschweißt, werden können. Mit anderen Worten kann auf eine aktive Erwärmung des ersten Verbindungsbereiches verzichtet werden, wodurch auch ein entsprechendes Heizelement und die hierfür benötigte Mechanik verzichtet werden kann, und wodurch der Platzbedarf in einem Mittenrahmen zum Anbringen des Versteifungselements insgesamt verkleinert werden kann. Hierdurch lassen sich auch kleinere Flüssigkeitsbehälter mit einem derartigen Versteifungselement verschweißen.

Durch die größere erste Verbindungsfläche des ersten Verbindungsbereichs gegenüber der zweiten Verbindungsfläche kann weiterhin die gewünschte Verbindungsfestigkeit im Vergleich zu einer stoffschlüssigen Verbindung mit einer kleineren Verbindungsfläche die aktiv erwärmt wird, insbesondere der zweiten Verbindungsfläche des zweiten Verbindungsbereichs, eingehalten werden.

Optional weit die zweite Verbindungsfläche zwei Symmetrieachsen auf, wobei sich der zweite Verbindungsbereich entlang der ersten Symmetrieachse länger erstreckt als entlang der zweiten Symmetrieachse.

Versuche haben gezeigt, dass ein zweiter Verbindungsbereich besonders vorteilhaft gestaltet werden kann, wenn dieser zwei Symmetrieachsen aufweist, insbesondere eine quadratische Grundform, eine rechteckige Grundform, eine elliptische Grundform, eine kreisförmige Grundform oder eine Mischung von wenigstens zwei vorgenannten Grundformen aufweist.

Hierdurch kann der zweite Verbindungsbereich besonders vorteilhaft an die designiert auftretenden Betriebslasten in dem designierten Flüssigkeitsbehälter angepasst werden, wodurch das Gewicht des Versteifungselements reduziert werden kann.

Gemäß einer bevorzugten Ausführungsform weist die zweite Verbindungsfläche eine Vertiefung mit einem Hinterschnitt auf.

Die Vertiefung in der zweiten Verbindungsfläche erlaubt insbesondere in Kombination mit einem Hinterschnitt der Vertiefung eine kraftschlüssige und/oder formschlüssige Verbindung zwischen dem zweiten Verbindungsbereich und dem designierten Flüssigkeitstank oder seinem Vorformling, insbesondere wegen der gegenseitigen Durchdringung der Bauteile. Hierdurch kann optional eine stoffschlüssige Verbindung unterstützt werden.

Gemäß einer bevorzugten Ausführungsform wird der erste Verbindungsbereich von einem ersten Verbindungsstück aufgewiesen, der zweite Verbindungsbereich von einem zweiten Verbindungsstück aufgewiesen und der Mittelbereich von einem Mittelstück aufgewiesen, wobei das Mittelstück mit dem ersten Verbindungsstück und dem zweiten Verbindungsstück kraftschlüssig und/oder formschlüssig verbunden ist.

### Begrifflich sei hierzu Folgendes erläutert:

Unter einem "Verbindungsstück" wird ein Bauteil eines Versteifungselements verstanden, welches einen Verbindungsbereich aufweist. Ein erstes Verbindungsstück ist dabei dazu eingerichtet, mit einem "Mittelstück" des Versteifungselements verbunden zu werden, insbesondere kraftschlüssig und/oder formschlüssig verbunden zu werden, während ein zweites Verbindungsstück dazu eingerichtet ist, mit dem Mittelstück an der gegenüberliegenden Seite des ersten Verbindungsstückes verbunden zu werden, insbesondere kraftschlüssig und/oder formschlüssig verbunden zu werden. Vorzugsweise bildet ein Mittelstück gemeinsam mit zwei Verbindungsstücken ein Versteifungselement. Vorzugsweise weist ein Mittelstück eine oder mehrere Streben auf. Vorzugsweise ist ein Mittelstück plattenartig gestaltet und/oder weist Versteifungsquerrippen auf.

Die hier vorgeschlagene Mehrkomponentenweise, erlaubt die Verwendung unterschiedlicher Materialien für die Verbindungsstücke und das Mittelstück. So können die Verbindungsstücke stofflich an eine stoffschlüssige Verbindung mit dem designierten Flüssigkeitsbehälter oder seinem Vorformling angepasst werden, während das Mittelstück aus einem Material mit einer höheren Zugfestigkeit ausgeführt werden kann, wodurch zur Gewährleistung der Bruchsicherheit gegenüber den designierten Betriebslasten das Gewicht des Versteifungselements reduziert werden kann, insbesondere im Bereich des Mittelstückes.

Somit kann eine abschnittsweise Optimierung des Versteifungselements erreicht werden.

Bevorzugt ist das Mittelstück aus PA (Polyamid), PAI (Polyamidimid), PEEK Polyetheretherketon), PPA (Polyphtalamide), PBT (Polybutylenterephthalat), POM (Polyoxymethylen) oder PPS (Polyphenylensulfid) gefertigt.

Vorteilhaft kann hierdurch ein besonders gutes Verhältnis aus Zugfestigkeit und Dichte des Mittelstücks erreicht werden.

Besonders zweckmäßig weist das Versteifungselement eine Längserstreckung von größer oder gleich 100 mm auf.

Vorzugsweise weist das Versteifungselement eine Längserstreckung von größer oder gleich 90 mm auf, bevorzugt von größer oder gleich 110 mm und besonders bevorzugt von größer oder gleich 120 mm.

Vorzugsweise weist das Versteifungselement eine Längserstreckung von größer oder gleich 140 mm auf, bevorzugt von größer oder gleich 160 mm und besonders bevorzugt von größer oder gleich 180 mm. Weiterhin vorzugsweise weist das Versteifungselement eine Längserstreckung von größer oder gleich 190 mm auf, bevorzugt von größer oder gleich 200 mm und besonders bevorzugt von größer oder gleich 220 mm.

Ausdrücklich sei darauf hingewiesen, dass die vorstehenden Werte für die Längserstreckung des Versteifungselements nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe der hier vorgeschlagenen Längserstreckung des Versteifungselements liefern.

Gemäß einer bevorzugten Ausführungsform weist der Mittelbereich und/oder das Mittelstück eine Sollbruchstelle auf.

### Begrifflich sei hierzu Folgendes erläutert:

Unter einer "Sollbruchstelle" wird eine besondere Ausgestaltung einer definierten Stelle verstanden, die dazu eingerichtet ist, bei einer definierten Belastung vorhersagbar zu brechen.

Hierdurch kann erreicht werden, dass das Versteifungselement bei einer Überlast kontrolliert versagt. Auf diese Weise kann vermieden werden, dass ein designierter Flüssigkeitsbehälter bei kleineren Lasten die zu einem Versagen der Sollbruchstelle führen undicht wird.

Optional weist der Mittelbereich und/oder das Mittelstück zumindest eine Durchgangsöffnung auf.

### Begrifflich sei hierzu Folgendes erläutert:

Unter einer "Durchgangsöffnung" wird eine Materialausnehmung innerhalb des Versteifungselements verstanden. Vorzugsweise ist eine Durchgangsöffnung dazu eingerichtet, als Sollbruchstelle zu wirken und/oder von einer designierten Flüssigkeit in dem designierten Flüssigkeitsbehälter durchströmt zu werden und/oder als Verbindungsmittel mit einem an dem Versteifungselement anbringbaren Anbauteil zu dienen.

Hierdurch kann das Versteifungselement von einer designierten Flüssigkeit in dem designierten Flüssigkeitsbehälter durchströmt werden, wodurch die designierten Betriebslasten für das Versteifungselement reduziert werden können.

Weiterhin ermöglichen die Durchgangsöffnungen auf einfache Art und Weise das Anbringen von Anbauteilen an dem Versteifungselement, etwa das Anbringen von Schwallschutzwänden, sodass eine Funktionsintegration für das Versteifungselement erreicht werden kann.

Zweckmäßig sind eine Abzugskraft zwischen dem Mittelstück und dem ersten Verbindungsstück sowie eine Abzugskraft zwischen dem Mittelstück und dem zweiten Verbindungsstück größer oder gleich 7 kN sind.

### Begrifflich sei hierzu Folgendes erläutert:

Unter einer "Abzugskraft" wird diejenige Zugkraft verstanden, die aufgewendet werden muss, um zwei Bauteile, insbesondere ein Verbindungsstück und ein Mittelstück, voneinander zu lösen, insbesondere mittels einer Zugmaschine vorzugsweise aufweisend eine Zuggeschwindigkeit von 50-100 mm/min. Ein Lösen kann hierbei einerseits durch Bruch und andererseits durch Lösen einer kraftschlüssigen und/oder formschlüssigen Verbindung entstehen.

Vorzugsweise ist die Abzugskraft größer oder gleich 8 kN, bevorzugt größer oder gleich 9 kN und besonders bevorzugt größer oder gleich 10 kN.

Vorzugsweise ist die Abzugskraft größer oder gleich 12 kN, bevorzugt größer oder gleich 15 kN und besonders bevorzugt größer oder gleich 18 kN.

Vorteilhaft kann hierdurch erreicht werden, dass die Vorgaben für die Belastbarkeit eines Versteifungselements eingehalten werden können.

Ausdrücklich sei darauf hingewiesen, dass die vorstehenden Werte für die Abzugskraft nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe der hier vorgeschlagenen Abzugskraft liefern.

Besonders bevorzugt übersteigt die Zugfestigkeit des Mittelstücks die Zugfestigkeit des ersten Verbindungsstücks und/oder des zweiten Verbindungsstücks um den Faktor 3 oder weniger, wobei die Zugfestigkeit nach DIN EN ISO 527 bestimmt werden kann.

Vorzugsweise übersteigt die Zugfestigkeit des Mittelstücks die Zugfestigkeit des ersten Verbindungsstücks und/oder des zweiten Verbindungsstücks um den Faktor 2,8 oder weniger, bevorzugt um den Faktor 2,6 oder weniger und besonders bevorzugt um den Faktor 3,2 oder weniger.

Hierdurch kann vorteilhaft erreicht werden, dass die entsprechende Spezifikation für eine sichere Verbindung von Mittelstück und Verbindungsstück auch bei unterschiedlichen Materialeigenschaften eingehalten werden kann.

Ausdrücklich sei darauf hingewiesen, dass die vorstehenden Werte für das Verhältnis der Zugfestigkeiten nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs des Verhältnisses der Zugfestigkeiten liefern.

Nach einem zweiten Aspekt der Erfindung löst die Aufgabe ein Flüssigkeitsbehälter für ein Kraftfahrzeug, mit einem Versteifungselement nach dem ersten Aspekt der Erfindung, wobei das Versteifungselement in einem Innenraum des Flüssigkeitsbehälters angeordnet ist.

Es versteht sich, dass sich die Vorteile eines Versteifungselements für einen Flüssigkeitsbehälter nach dem ersten Aspekt der Erfindung wie vorstehend beschrieben unmittelbar auf einen Flüssigkeitsbehälter aufweisend ein Versteifungselement nach dem ersten Aspekt der Erfindung erstrecken.

Es sei ausdrücklich darauf hingewiesen, dass der Gegenstand des zweiten Aspekts mit dem Gegenstand des vorstehenden Aspekts der Erfindung vorteilhaft kombinierbar ist, und zwar sowohl einzeln oder in beliebiger Kombination kumulativ.

Nach einem dritten Aspekt der Erfindung löst die Aufgabe ein Verfahren zur Herstellung eines Flüssigkeitsbehälters für ein Kraftfahrzeug aufweisend ein Versteifungselement nach dem ersten Aspekt der Erfindung, aufweisend die nachfolgenden Schritte:
- Ausformen eines Vorformlings;
- Einbringen des Vorformlings in eine formgebende geöffnete Kavität;
- Einbringen des Versteifungselements;
- Stoffschlüssiges Verbinden des ersten Verbindungsbereichs des Versteifungselements mit dem Vorformling, wobei die stoffschlüssige Verbindung mit der ersten Wärme des Vorformlings bewirkt wird;
- Erhitzen des zweiten Verbindungsbereichs des Versteifungselements mit einem Heizelement;
- Stoffschlüssiges Verbinden des Vorformlings, insbesondere durch Schließen der formgebenden Kavität, und Ausformen des verbundenen Vorformlings zu dem Flüssigkeitsbehälter;
- Stoffschlüssiges Verbinden des zweiten Verbindungsbereichs mit dem Vorformling oder dem Flüssigkeitsbehälter.

### Begrifflich sei hierzu Folgendes erläutert:

Unter einem "Vorformling" wird ein in einem vorangeschalteten Arbeitsschritt durch Spritzgießen hergestellter Körper verstanden, der dazu eingerichtet ist, während einem Blasformverfahren zu einem Flüssigkeitsbehälter ausgeformt zu werden. Ein Vorformling kann unterschiedliche Geometrien aufweisen, etwa zwei parallel zueinander orientierte flache Geometrien, zwei im Wesentlichen parallel zueinander orientierte I-förmige Geometrien oder eine C-förmige Geometrie.

Unter der "ersten Wärme" wird die Wärmeenergie verstanden, welche der Vorformling beim Einbringen in die formgebende Kavität aufweist. Insbesondere ist der Vorformling durch die von ihm aufgewiesene erste Wärme noch so warm, dass er noch nicht kristallisiert ist. Insbesondere bezeichnet die erste Wärme diejenige Wärme abzüglich der auftretenden Prozessverluste durch Wärmestrahlung und/oder Konvektion, mit der der Vorformling von der Spritzgießmaschine ausgeformt wird.

Unter einem "Heizelement" wird jedes Gerät verstanden, mit welchem dem Vorformling und/oder dem Versteifungselement, insbesondere dem zweiten Verbindungsbereich, Wärme zugeführt werden kann. Insbesondere ist ein Heizelement ein Infrarot-Strahler. Insbesondere ist ein Heizelement ein im Betrieb stromdurchflossener elektrischer Widerstand.

Hier wird ein Herstellverfahren vorgeschlagen, welches sich die durch das Versteifungselement nach dem ersten Aspekt der Erfindung ermöglichten Vorteile zu Nutze macht und hierdurch weitere Vorteile bereitstellen kann.

Es sei ausdrücklich darauf hingewiesen, dass die vorgeschlagenen Verfahrensschritte, soweit dies für den Fachmann sinnvoll ist, auch in einer anderen Reihenfolge durchlaufen werden können oder teilweise parallel zueinander ausgeführt werden können, ohne dabei den hier vorgeschlagenen Aspekt der Erfindung zu verlassen.

Vorzugsweise wird das Versteifungselement mittels einem Mittenrahmen zwischen den Vorformling des designierten Kraftstofftanks eingebracht.

Vorzugsweise erfolgt das stoffschlüssige Verbinden des Vorformlings und/oder das Ausformen des Vorformlings zu dem Flüssigkeitsbehälter und das stoffschlüssige Verbinden des zweiten Verbindungsbereichs mit dem designierten Flüssigkeitsbehälter oder seinem Vorformling zeitgleich.

Es versteht sich, dass sich die Vorteile eines Versteifungselements für einen Flüssigkeitsbehälter nach dem ersten Aspekt der Erfindung wie vorstehend beschrieben unmittelbar auf ein Verfahren zur Herstellung eines Flüssigkeitsbehälters aufweisend ein Versteifungselement nach dem ersten Aspekt der Erfindung erstrecken.

Es sei ausdrücklich darauf hingewiesen, dass der Gegenstand des dritten Aspekts mit den Gegenständen der vorstehenden Aspekte der Erfindung vorteilhaft kombinierbar ist, und zwar sowohl einzeln oder in beliebiger Kombination kumulativ.

Weitere Vorteile, Einzelheiten und Merkmale der Erfindung ergeben sich nachfolgend aus den erläuterten Ausführungsbeispielen. Dabei zeigen im Einzelnen:
- Figur 1:: ein Versteifungselement in einer perspektivischen Ansicht; und
- Figur 2:: schematisch ein Versteifungselement verbunden mit einem segmentweise dargestellten Flüssigkeitsbehälter.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

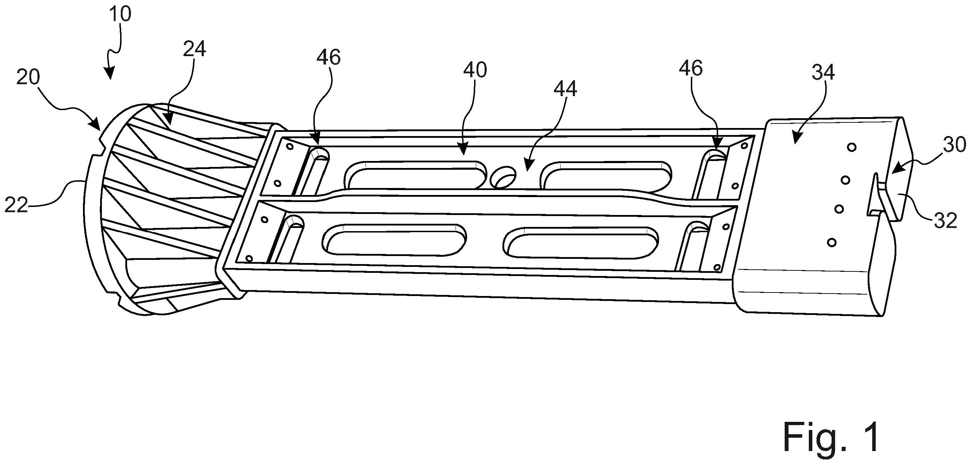

Das Versteifungselement (10) für einen Flüssigkeitsbehälter (12) für ein Kraftfahrzeug in Fig. 1 besteht im Wesentlichen aus einem ersten Verbindungsbereich (20), einem zweiten Verbindungsbereich (30) und einem Mittelbereich (40), wobei der erste Verbindungsbereich (20) und der zweite Verbindungsbereich (30) zumindest mittelbar durch den Mittelbereich (40) miteinander verbunden sind, wobei der erste Verbindungsbereich (20) und der zweite Verbindungsbereich (30) eine unterschiedliche Verbindungsgeometrie aufweisen und wobei eine erste Verbindungsfläche (22) des ersten Verbindungsbereichs (20) größer ist als eine zweite Verbindungsfläche (32) des zweiten Verbindungsbereichs (30).

Das Versteifungselement (10) in Fig. 1 ist mittels mehrerer Komponenten ausgestaltet, wobei der erste Verbindungsbereich (20) von einem ersten Verbindungsstück (24) aufgewiesen wird, wobei der zweite Verbindungsbereich (30) von einem zweiten Verbindungsstück (34) aufgewiesen wird und wobei der Mittelbereich (40) von einem Mittelstück (44) aufgewiesen wird, wobei das Mittelstück (44) mit dem ersten Verbindungsstück (24) und dem zweiten Verbindungsstück (34) kraftschlüssig und/oder formschlüssig verbunden ist.

Das Mittelstück 44 weist zwei Sollbruchstellen 46 auf, welche zum kontrollierten Versagen des Versteifungselements 10 eingerichtet sind.

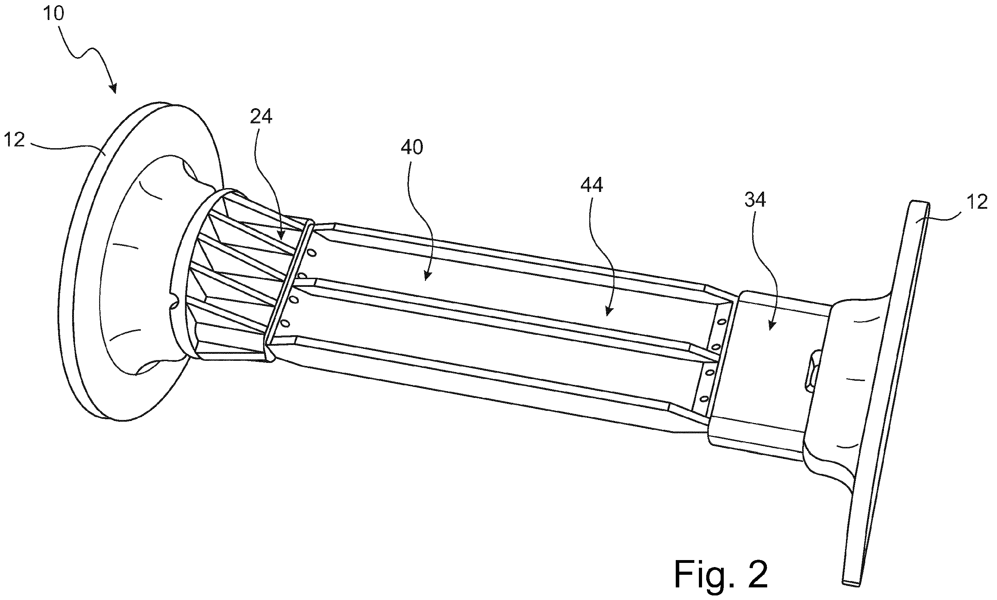

Das Mittelstück 44 weist eine Mehrzahl von Durchgangsöffnungen auf (nicht gekennzeichnet), welche von einer designierten Flüssigkeit innerhalb des designierten Flüssigkeitsbehälters 12 (Fig. 2) durchströmt werden können und somit zu einer Reduktion der Betriebslasten des Versteifungselements 10 beitragen.

Weiterhin erlauben die Durchgangsöffnungen auf einfache Art und Weise ein Anbringen von Anbauteilen (nicht dargestellt) an dem Versteifungselement 10.

Das erste Verbindungsstück 24 weist sich seitlich erstreckende Querrippen (nicht gekennzeichnet) auf, welche die Steifigkeit des Verbindungsstücks 24 bei gleichzeitig geringem Zusatzgewicht erhöhen.

Das Versteifungselement 10 in Fig. 2 ist bereits in seinen designierten Flüssigkeitsbehälter 12 eingebracht, welcher schematisch durch die an die Verbindungsstücke 24, 34 angrenzenden Bereiche des Flüssigkeitsbehälters 12 dargestellt ist.

Das erste Verbindungsstück 24 ist stoffschlüssig mit dem Flüssigkeitsbehälter 12 verbunden. Das zweite Verbindungsstück 34 ist stoffschlüssig mit dem Flüssigkeitsbehälter 12 verbunden.

### Bezugszeichenliste

- 10: Versteifungselement
- 12: Flüssigkeitsbehälter
- 20: erster Verbindungsbereich
- 22: erste Verbindungsfläche
- 24: erstes Verbindungsstück
- 30: zweiter Verbindungsbereich
- 32: zweite Verbindungsfläche
- 34: zweites Verbindungsstück
- 40: Mittelbereich
- 44: Mittelstück
- 46: Sollbruchstelle

## Patentansprüche

1. Versteifungselement (10) für einen Flüssigkeitsbehälter (12) für ein Kraftfahrzeug, wobei das Versteifungselement (10) einen ersten Verbindungsbereich (20), einen zweiten Verbindungsbereich (30) und einen Mittelbereich (40) aufweist, wobei der erste Verbindungsbereich (20) und der zweite Verbindungsbereich (30) zumindest mittelbar durch den Mittelbereich (40) miteinander verbunden sind, wobei der erste Verbindungsbereich (20) und der zweite Verbindungsbereich (30) eine unterschiedliche Verbindungsgeometrie aufweisen und wobei eine erste Verbindungsfläche (22) des ersten Verbindungsbereichs (20) größer ist als eine zweite Verbindungsfläche (32) des zweiten Verbindungsbereichs (30),
wobei
- der erste Verbindungsbereich (20) von einem ersten Verbindungsstück (24) aufgewiesen wird,
- der zweite Verbindungsbereich (30) von einem zweiten Verbindungsstück (34) aufgewiesen wird,
- der Mittelbereich (40) von einem Mittelstück (44) aufgewiesen wird, wobei das Mittelstück (44) mit dem ersten Verbindungsstück (24) und dem zweiten Verbindungsstück (34) kraftschlüssig und/oder formschlüssig verbunden ist, **dadurch gekennzeichnet, dass**
- der Mittelbereich (40) und/oder das Mittelstück (44) zumindest eine Durchgangsöffnung aufweist.

2. Versteifungselement (10) nach Anspruch 1, **dadurch gekennzeichnet, dass** ein Flächenverhältnis aus der ersten Verbindungsfläche (22) zu der zweiten Verbindungsfläche (32) in einem Bereich zwischen 1,1 und 3,5 liegt, bevorzugt in einem Bereich zwischen 1,2 und 2,9 und besonders bevorzugt in einem Bereich zwischen 1,3 und 2,5.

3. Versteifungselement (10) nach einem der Ansprüche 1 oder 2, **dadurch gekennzeichnet, dass** die erste Verbindungsfläche (22) radialsymmetrisch ausgestaltet ist.

4. Versteifungselement (10) nach einem der voranstehenden Ansprüche, **dadurch gekennzeichnet, dass** der erste Verbindungsbereich (20) Schweißstifte aufweist.

5. Versteifungselement (10) nach einem der voranstehenden Ansprüche, **dadurch gekennzeichnet, dass** die zweite Verbindungsfläche (32) zwei Symmetrieachsen aufweist, wobei sich der zweite Verbindungsbereich (30) entlang der ersten Symmetrieachse länger erstreckt als entlang der zweiten Symmetrieachse.

6. Versteifungselement (10) nach einem der voranstehenden Ansprüche, **dadurch gekennzeichnet, dass** die zweite Verbindungsfläche (32) eine Vertiefung mit einem Hinterschnitt aufweist.

7. Versteifungselement (10) nach einem der voranstehenden Ansprüche, **dadurch gekennzeichnet, dass** das Mittelstück (44) aus PA, PAI, PEEK, PPA, PBT, POM oder PPS gefertigt ist.

8. Versteifungselement (10) nach einem der voranstehenden Ansprüche, **dadurch gekennzeichnet, dass** das Versteifungselement eine Längserstreckung von größer oder gleich 100 mm aufweist.

9. Versteifungselement (10) nach einem der voranstehenden Ansprüche, **dadurch gekennzeichnet, dass** der Mittelbereich (40) und/oder das Mittelstück (44) eine Sollbruchstelle (46) aufweist.

10. Versteifungselement (10) nach einem der voranstehenden Ansprüche, **dadurch gekennzeichnet, dass** eine Abzugskraft zwischen dem Mittelstück (44) und dem ersten Verbindungsstück (24) sowie eine Abzugskraft zwischen dem Mittelstück (44) und dem zweiten Verbindungsstück (34) größer oder gleich 7 kN sind.

11. Versteifungselement (10) nach einem der voranstehenden Ansprüche, **dadurch gekennzeichnet, dass** die Zugfestigkeit des Mittelstücks (44) die Zugfestigkeit des ersten Verbindungsstücks (24) und/oder des zweiten Verbindungsstücks (34) um den Faktor 3 oder weniger übersteigt.

12. Flüssigkeitsbehälter (12) für ein Kraftfahrzeug, mit einem Versteifungselement (10) nach einem der vorstehenden Ansprüche, wobei das Versteifungselement (10) in einem Innenraum des Flüssigkeitsbehälters (12) angeordnet ist.

13. Verfahren zur Herstellung eines Flüssigkeitsbehälters (12) für ein Kraftfahrzeug aufweisend ein Versteifungselement (10) nach einem der Ansprüche 1 bis 11, aufweisend die nachfolgenden Schritte:
- Ausformen eines Vorformlings;
- Einbringen des Vorformlings in eine formgebende geöffnete Kavität;
- Einbringen des Versteifungselements (10);
- Stoffschlüssiges Verbinden des ersten Verbindungsbereichs (20) des Versteifungselements (10) mit dem Vorformling, wobei die stoffschlüssige Verbindung mit der ersten Wärme des Vorformlings bewirkt wird;
- Erhitzen des zweiten Verbindungsbereichs (30) des Versteifungselements (10) mit einem Heizelement;
- Stoffschlüssiges Verbinden des Vorformlings, insbesondere durch Schließen der formgebenden Kavität, und Ausformen des verbundenen Vorformlings zu dem Flüssigkeitsbehälter (12);
- Stoffschlüssiges Verbinden des zweiten Verbindungsbereichs (30) mit dem Vorformling oder dem Flüssigkeitsbehälter (12).

## Claims

1. A stiffening element (10) for a liquid container (12) for a motor vehicle, wherein the stiffening element (10) has a first connection area (20), a second connection area (30), and a central area (40), wherein the first connection area (20) and the second connection area (30) are at least indirectly connected to one another by the central area (40), wherein the first connection area (20) and the second connection area (30) have a different connection geometry and wherein a first connection surface (22) of the first connection area (20) is larger than a second connection surface (32) of the second connection area (30), wherein
- the first connection area (20) is had by a first connection piece (24),
- the second connection area (30) is had by a second connection piece (34),
- the central area (40) is had by a central piece (44), wherein the central piece (44) is connected to the first connection piece (24) and the second connection piece (34) in a non-positive and/or form closure manner,
**characterized in that**
- the central area (40) and/or the central piece (44) has at least one through-opening.

2. The stiffening element (10) according to claim 1, **characterized in that** an area ratio from the first connection surface (22) to the second connection surface (32) is in a range between 1.1 and 3.5, preferably in a range between 1.2 and 2.9 and particularly preferably in a range between 1.3 and 2.5.

3. The stiffening element (10) according to one of claims 1 or 2, **characterized in that** the first connection surface (22) is radially symmetrical.

4. The stiffening element (10) according to any of the preceding claims, **characterized in that** the first connection area (20) has welding pins.

5. The stiffening element (10) according to any of the preceding claims, **characterized in that** the second connection surface (32) has two symmetry axes, wherein the second connection area (30) extends longer along the first symmetry axis than along the second symmetry axis.

6. The stiffening element (10) according to any of the preceding claims, **characterized in that** the second connection surface (32) has a recess with an undercut.

7. The stiffening element (10) according to any of the preceding claims, **characterized in that** the central piece (44) is made of PA, PAI, PEEK, PPA, PBT, POM or PPS.

8. The stiffening element (10) according to any of the preceding claims, **characterized in that** the stiffening element has a longitudinal extension greater than or equal to 100 mm.

9. The stiffening element (10) according to any of the preceding claims, **characterized in that** the central area (40) and/or the central piece (44) has a predetermined breaking point (46).

10. The stiffening element (10) according to any of the preceding claims, **characterized in that** a pull-off force between the central piece (44) and the first connector (24) and a pull-off force between the central piece (44) and the second connector (34) are greater than or equal to 7 kN.

11. The stiffening element (10) according to any of the preceding claims, **characterized in that** the tensile strength of the central piece (44) exceeds the tensile strength of the first connection piece (24) and/or the second connection piece (34) by a factor of 3 or less.

12. A liquid container (12) for a motor vehicle, comprising a stiffening element (10) according to any of the preceding claims, wherein the stiffening element (10) is arranged in an interior space of the liquid container (12).

13. A method of production of a liquid container (12) for a motor vehicle comprising a stiffening element (10) according to any of claims 1 to 11, comprising the following steps:
- forming of a preform;
- inserting the preform into a molding open cavity;
- inserting the stiffening element (10);
- material-locking connection of the first connection area (20) of the stiffening element (10) to the preform, wherein the material-locking connection is effected with the first heat of the preform;
- heating the second connection area (30) of the stiffening element (10) with a heating element;
- material-locking connection of the preform, in particular by closing the molding cavity, and molding of the connected preform into the liquid container (12);
- material-locking connection of the second connection area (30) to the preform or liquid container (12).

## Revendications

1. Élément de raidissement (10) pour un réservoir pour liquide (12) pour un véhicule automobile, dans lequel l'élément de raidissement (10) présente une première zone de liaison (20), une seconde zone de liaison (30) et une zone centrale (40), dans lequel la première zone de liaison (20) et la seconde zone de liaison (30) sont reliées entre elles au moins indirectement par la zone centrale (40), dans lequel la première zone de liaison (20) et la seconde zone de liaison (30) présentent des géométries de liaison différentes et dans lequel une première surface de liaison (22) de la première zone de liaison (20) est plus grande qu'une seconde surface de liaison (32) de la seconde zone de liaison (30),
dans lequel
- la première zone de liaison (20) est représentée par une première pièce de liaison (24),
- la seconde zone de liaison (30) est représentée par une seconde pièce de liaison (34),
- la zone centrale (40) est représentée par une pièce centrale (44), dans lequel la pièce centrale (44) est reliée à force et/ou par complémentarité de forme à la première pièce de liaison (24) et à la seconde pièce de liaison (34),
**caractérisé en ce que**
- la zone centrale (40) et/ou la pièce centrale (44) présentent au moins une ouverture de passage.

2. Élément de renforcement (10) selon la revendication 1,
**caractérisé en ce qu'**un rapport de surface de la première surface de liaison (22) à la seconde surface de liaison (32) se situe dans une plage comprise entre 1,1 et 3,5, de préférence dans une plage comprise entre 1,2 et 2,9 et de manière particulièrement préférée dans une plage comprise entre 1,3 et 2,5.

3. Élément de raidissement (10) selon l'une des revendications 1 ou 2, **caractérisé en ce que** la première surface de liaison (22) est conçue de manière à être radialement symétrique.

4. Élément de raidissement (10) selon l'une des revendications précédentes, **caractérisé en ce que** la première zone de liaison (20) présente des tiges de soudage.

5. Élément de raidissement (10) selon l'une des revendications précédentes, **caractérisé en ce que** la seconde surface de liaison (32) présente deux axes de symétrie, dans lequel la seconde zone de liaison (30) s'étend plus en longueur le long du premier axe de symétrie que le long du second axe de symétrie.

6. Élément de raidissement (10) selon l'une des revendications précédentes, **caractérisé en ce que** la seconde surface de liaison (32) présente un creux comportant une contre-dépouille.

7. Élément de renforcement (10) selon l'une des revendications précédentes, **caractérisé en ce que** la pièce centrale (44) est fabriquée en PA, PAI, PEEK, PPA, PBT, POM ou PPS.

8. Élément de raidissement (10) selon l'une des revendications précédentes, **caractérisé en ce que** l'élément de raidissement présente une extension longitudinale supérieure ou égale à 100 mm.

9. Élément de renforcement (10) selon l'une des revendications précédentes, **caractérisé en ce que** la zone centrale (40) et/ou la pièce centrale (44) présentent un point de rupture (46).

10. Élément de raidissement (10) selon l'une des revendications précédentes, **caractérisé en ce qu'**une force d'arrachement entre la pièce centrale (44) et la première pièce de liaison (24) ainsi qu'une force d'arrachement entre la pièce centrale (44) et la seconde pièce de liaison (34) sont supérieures ou égales à 7 kN.

11. Élément de raidissement (10) selon l'une des revendications précédentes, **caractérisé en ce que** la résistance à la traction de la pièce centrale (44) dépasse la résistance à la traction de la première pièce de liaison (24) et/ou de la seconde pièce de liaison (34) d'un facteur 3 ou moins.

12. Réservoir pour liquide (12) pour un véhicule automobile, comportant un élément de raidissement (10) selon l'une des revendications précédentes, dans lequel l'élément de raidissement (10) est disposé dans un espace intérieur du réservoir pour liquide (12).

13. Procédé pour la fabrication d'un réservoir pour liquide (12) pour un véhicule automobile présentant un élément de raidissement (10) selon l'une des revendications 1 à 11, présentant les étapes suivantes :
- formage d'une préforme ;
- introduction de la préforme dans une cavité ouverte de formage ;
- introduction de l'élément de raidissement (10) ;
- liaison par liaison de matière de la première zone de liaison (20) de l'élément de raidissement (10) avec la préforme, dans lequel la liaison par liaison de matière est effectuée avec la première chaleur de la préforme ;
- chauffage de la seconde zone de liaison (30) de l'élément de raidissement (10) avec un élément chauffant ;
- liaison par liaison de matière de la préforme, en particulier par fermeture de la cavité de formage, et formage de la préforme reliée pour former le réservoir pour liquide (12) ;
- liaison par liaison de matière de la seconde zone de liaison (30) avec la préforme ou le réservoir pour liquide (12).
